Europäisches Patentamt

(19) European Patent Office

Office européen des brevets

(11) Publication number: **0 177 118**
A2

(12) # EUROPEAN PATENT APPLICATION

(21) Application number: 85303612.7

(22) Date of filing: 22.05.85

(51) Int. Cl.⁴: **B 01 D 17/04**

(30) Priority: **04.09.84 US 646523**

(43) Date of publication of application:
**09.04.86 Bulletin 86/15**

(84) Designated Contracting States:
**AT BE CH DE FR GB IT LI LU NL SE**

(71) Applicant: **KEENE INTERNATIONAL LIMITED
Unit 23 Mitcham Industrial Estate Streatham Road
Mitcham Surrey CR4 2AP(GB)**

(72) Inventor: **Knight, Noel Edward
130 Harestone Valley Road
Caterham Surrey(GB)**

(72) Inventor: **Sprenger, Gregory S.
207 Cumberland Drive
Lagrange Georgia(US)**

(74) Representative: **Bayliss, Geoffrey Cyril et al,
BOULT, WADE & TENNANT 27 Furnival Street
London EC4A 1PQ(GB)**

㉝ **Fuel filter and dehydrator element and method of filtering and dehydrating fuel.**

㉗ In a fuel filter and dehydrator element for example for use in an aviation fuel supply system, fuel is supplied to a coalescing layer (57) of material which coalesces water in the fuel into droplets. The fuel and water droplets are then passed to an absorptive layer (56) which absorbs at least some of the water droplets and as it becomes saturated reduces in permeability and thus causes a pressure drop. The fuel and any water remaining therein is then passed to further coalescing and absorptive layers (55, 54) which act similarly. As the first absorptive layer (56) approaches saturation, the pressure drop caused is reacted by the second coalescing layer (55), which causes that layer to be compressed and thus water droplets therein are exhuded to the second absorptive layer (54) which thus also reduces in permeability and thus there is a further pressure drop across the whole element. Therefore, once the element becomes saturated with water it shuts off fuel flow more sharply than an element employing only one pair of layers. Further pairs of layers (46, 45) may be employed to produce a more marked effect.

./...

FIG. 2.

## FUEL FILTER AND DEHYDRATOR ELEMENT AND
## METHOD OF FILTERING AND DEHYDRATING FUEL

One aspect of this invention relates generally to a fuel filter dehydrator element, and particularly, but not exclusively, to a fuel filter dehydrator element for use with an aviation fuel supply system which automatically shuts off fuel flow upon saturation of the filter dehydrator.

Specifically, this invention relates to a fuel filter dehydrator element comprising a sandwich of layers of material including a layer of material which is adapted to absorb and retain water, and upstream thereof a layer of material which is adapted to coalesce water, whereby water in fuel passing through the coalescing layer is coalesced into droplets at least some of which are absorbed by the absorptive layer, the absorptive layer being adapted to reduce in permeability as the material thereof becomes saturated with water and thus cause a pressure drop across the absorptive layer.

Such an element is disclosed in patent specification GB 927888 (Muller). The coalescing and absorptive layers of the element disclosed in GB 927888 are spaced apart and it is suggested in that specification that water droplets which are released by the coalescing layer gravitate down the space to a water outlet at the bottom of the annular space. It is further suggested that if separation of water and fuel is not achieved by the coalescing layer, then the water finds its way into the absorptive layer, which is a column of paper rings held under compression, where the water is absorbed and causes the rings to swell, such that eventually a point is reached at which the pressure in the column of paper rings is so high that fuel can no longer pass through the column of rings and thus the element cuts-off the fuel flow.

It is believed that in operation of the element of GB 927888 a significant proportion of the water droplets released by the coalescing column do not gravitate to the water outlet, but rather are carried by the fuel flow across the space to the absorptive column where they are absorbed by the paper rings and thus cause the paper rings to swell. Furthermore, it is believed that the element of GB 927888 takes an unacceptably long time to react to high levels of water in the fuel and that, during the time that the element is cutting-off the flow, water is washed through the column of paper rings and passes to the fuel outlet.

Another fuel filter dehydrator element is disclosed in patent specification US 4242206 (Estabrooke). That specification discloses an element which uses a water dispersive layer rather than a water coalescing layer. However, the absorptive layer is porous to very small droplets of water and thus the dispersing action of the layer upstream of the absorptive layer hinders rather than helps the dehydrating action of the element.

In accordance with one aspect of the present invention, the sandwich of layers includes a second such absorptive layer upstream of the first-mentioned coalescing layer and a second such coalescing layer upstream of the second absorptive layer, the element further comprising means to support the sandwich of layers, such that as the second absorptive layer becomes water saturated and reduces in permeability, the pressure drop across that layer is reacted by and compresses the first coalescing layer, thus forcing water to exhude from the first coalescing layer into the first absorptive layer thereby to reduce the permeability of the first absorptive layer and thus reduce further the overall permeability of the filter element.

Such an element is more efficient in its dehydrating action than the two known arrangements described above and provides a quicker cut-off of fuel flow once the element has become saturated.

Another aspect of this invention relates to a method of filtering and dehydrating fuel and provides a method comprising the steps of passing fuel through a layer of material which coalesces into droplets water in the fuel, passing the fuel and water droplets to an absorptive layer of material which can pass the fuel but which absorbs at least some of the droplets and which reduces in permeability as the layer becomes saturated with water to cause a pressure drop across the absorptive layer, characterised by subsequently passing the fuel through a second pair of such layers, using the second coalescing layer to react at least in part the pressure drop across the first absorptive layer as that layer becomes saturated, and thus cause compression of the second coalescing layer, using such compression of the second coalescing layer to cause water droplets to exhude from the second coalescing layer into the second absorptive layer to reduce the permeability of the second absorptive layer and thus increase the total pressure drop across the layers.

There follows a description, by way of example, of a specific embodiment of fuel filter dehydrator element according to the invention, reference being made to the accompanying drawings, in which:

Fig. 1 is a perspective view of an element; and

Fig. 2 is an enlarged side view, of the element, partially broken away to illustrate the various layers of the element.

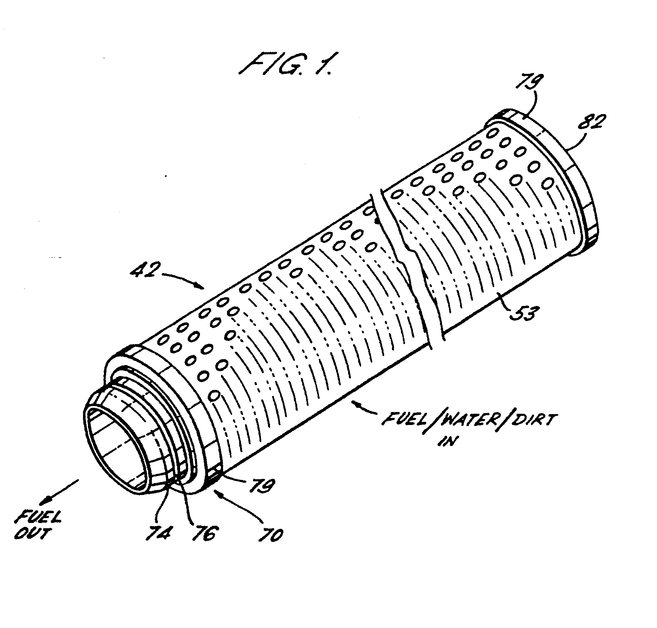

Referring to Fig. 1, a fuel filter dehydrator element assembly comprises a plurality of individual generally cylindrical fuel filter elements 42, which are mounted in a housing having an inlet and outlet such that fuel to be filtered and dehydrated passes into each element through the cylindrical side wall thereof and such that the filtered and dehydrated fuel exits from one end of the element.

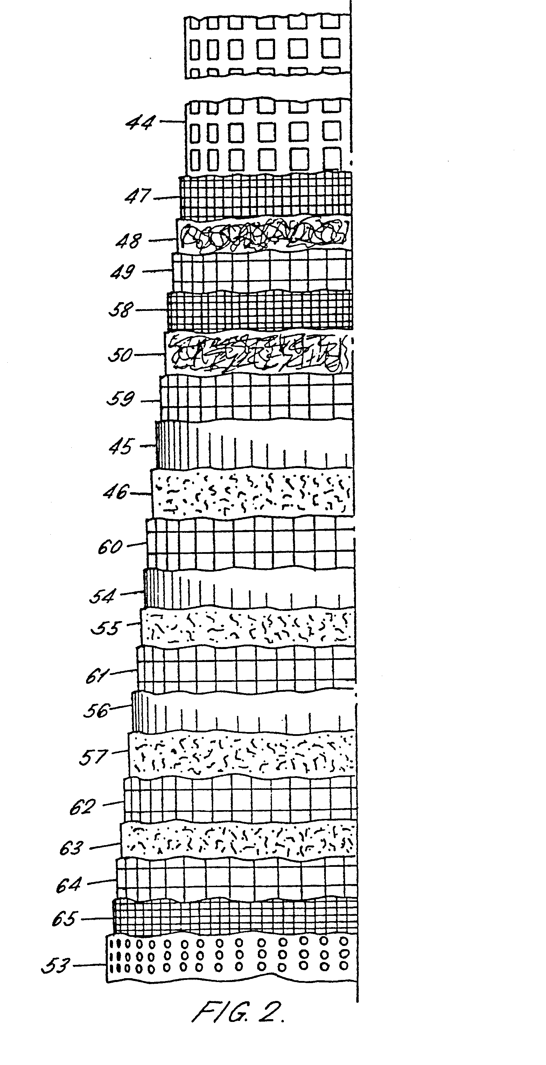

Referring to Fig. 2, each element 42 comprises a plurality of layers wound around a rigid porous support tube 44. The tube 44 can be formed of a variety of materials and may, for example, comprise a perforate molded or otherwise suitably formed cylindrical structure formed from a polymeric material, a cylindrical wire cage or a cylindrical structure formed from a suitable cellulose material.

Disposed about the center structural support tube 44 are a first layer of PVC coated fiberglass support screen 47; a first layer of spun bonded nylon media migration barrier 48; and a first layer of polyester scrim 49, which is used as a manufacturing convenience when applying layers 47 and 48. However, interleaved between the polyester scrim material 49 and the second layer of spun bonded nylon 50 is an addtional or second layer of PVC coated fiberglass support screen 58 and disposed between the second spun bonded layer 50 and the first layer of cellulose 45 is a second layer of polyester scrim 59, which is used as a manufacturing convenience when applying layers 50 and 58. A first sheet of cellulose 45 and layer of fiberglass 46 are applied with a third layer of polyester scrim 60. Similarly, the second and third sheets (54, 56) of cellulose and layers (55, 57) of fiberglass are applied with fourth and fifth layers of polyester scrim 61 and 62 respectively. After the fifth layer of scrim 62, a final layer of fiberglass is provided at 63. The fiberglass layer 63 is applied with a final layer of scrim 64. A final layer of PVC fiberglass screen 65 is disposed thereover. The outermost layer of fiberglass 63 is provided to initially coalesce water droplets entering the filter dehydrator element and provide an initial particulate filtering layer. A performated tubular jacket 53 extends over the exterior of the filter dehydrator element.

The cellulose fiber sheets 45, 54, 56 are a membrane-like sheet of water absorptive cross-linked carboxymethyl cellulose fiber. This cellulose fiber sheet absorbs free water droplets that are applied thereto, the water being taken up by intrafiber absorption. Absorption of water by the fiber produces rapid swelling of the fiber to form a gel of decreasing permeability. The cellulose fiber sheet 45, 54, 56 is preferably formed from a sheet of cross-linked carboxymethyl cellulose fiber sold by Daicell USA, Inc. 611 West 6th St., Los Angeles, CA 90017, under the trademark "Jelfine R-820". The material is formed in a tough membrane-like sheet having a thickness of approximately .007 inches 170 microns), and has a mass of approximately 0.018 pounds per square foot of sheet, or 90 grams per square meter. This material is different from the felt-like mass of cellulose material used in the prior art in that it is much thinner, 0.007 inches (170 microns) (as compared with .05 inches (1.3mm) used in US 4242206) and tougher. Although this material has the ability to absorb large amounts of water, in many cases twenty times its weight in

- 6 -    0177118

water, because it is thinner, a layer of this material absorbs less water than the thicker felt-like materials used in the prior art. When properly supported and incorporated in a filter dehydrator element of this type, and saturated with water, the material swells to an extent that the flow resistance of fluid therethrough is substantially increased and in fact overcomes the delivery pressure of the fuel supply system. The flow of fuel through the filter dehydrator element is thus effectively terminated by the creation of a diaphragm-like fluid impermeable sheet. This automatic, self-valving action upon saturation eliminates the need for other saturation sensing and mechanical valving structure.

The fiberglass layers 46, 55, 57 are designed to coalesce the residual water droplets within the fuel into larger water droplets that are unable to pass through the cellulose fiber sheet 45, 54, 56 despite the inherent porosity thereof. The water droplets which coalesce on the fiberglass layers 46, 55, 57 migrate in the direction of fuel flow to the cellulose fiber layer 45, 54 56, respectively where they are effectively retained. The fiberglass layer 46 is preferably formed from a material manufactured and sold by Owens-Corning Fiberglass Corporation of Toledo, Ohio as FM-004 or equivalents thereof. This particular fiberglass of Owens-Corning Giberglass Corporation has a mass of approximately 0.10 pounds per square foot (50 g per square meter) of sheet, a fiber diameter of approximately 0.00004 inch (1 microns) and is approximately 125 inches (6mm) thick.

The fiberglass acts as an agent for coalescing and collecting minute water particles in the fuel. This material characteristic is used to prevent minute water droplets from passing through the cellulose and to supplement significantly the water retaining function of the cellulose. this is in direct contradiction to the prior art teaching of U.S. 4,242,206 that uses materials to act as water emulsifying or dispersing agents.

Materials other than glass fiber that are found to have water coalescing properties may be used, for example, steel wool, stainless stell, aluminum or oxidised aluminum filaments or wires in random, woven or knitted form, aluminum oxides, fibers or filaments, or any combination of these materials.

The filter dehydrator elements 42 are manufactured by either spiral wrapping or single layer wrapping materials about the center support tube 44. During the wrapping process the layers are held in place by overlapping the ends of the layers of scrim 49, 59, 60, 61, 62 and 64; the fiberglass screen 47, 58 and 65; and the jacket 53 and applying a suitable adhesive to the overlapped ends.

The polyester scrim material is used only as a manufacturing convenience. It is a large weave material having openings approximately .25 inches (6mm) square. A suitable material for use as scrim is sold by Phenix Textiles of Phenix City, Alabama.

The PVC coated fiberglass screen 47, 58, 65 has a much smaller weave than the scrim material. Materials found suitable for the screen have approximately 18 lines per inch (7 lines per cm) and are manufactured by Phifer Wire Products of Tuscaloosa, Alabama. The function of the screen 47 is to support the other layers of material wrapped therearound over the apertures in support tube 44. The apertures in support tube 44 are relatively large 0.25 inches square (6mm) to reduce flow resistance. In other embodiments of the invention, for example, those using a porous cellulose support tube 44, the screen 47 may be eliminated.

The spun bonded nylon layers 48 and 50 provide a media migration barrier. A suitable material for this application is sold by Filtration Systems Products of St. Louis, Missouri. The final wrap of PVC fiberglass screen 65 is applied to protect the underlying layer of fiberglass and sheet of cellulose. This construction also procies excellent particulate filtering capability. As an alternative to the spun bonded nylon media migration barrier and the PVC coated glassfiber support layer, a single layer of bonded non-woven polyester fiber sheet may be used.

The final wrap is a perforate or porous tubular jacket 53 which extends about the exterior of the filter dehyrator element 42 to improve the cosmetic appearance of th filter element and further protect the underlying layers. The tubular jacket 53 may, for example, comprise a perforated cellulose sleeve.

Provision of multiple interleaved sheets and layers of water retaining cellulose and water coalescing fiberglass ensures full interaction between the water retaining cellulose and the water coalescing fiberglass. Further, the provision of multiple layers of fiberglass substantially adds to the total water holding capacity of the filter dehydrator element. This is an important feature since the relatively thin, membrane-like sheets of cellulose do not retain as much water as the relatively thick felt-like mass of cellulose used in prior art filter deydrator elements. In coalescing free water in the fuel into larger droplets, the fiberglass in effect increases the residence time of the water in the fiberglass which in turn increases the total water holding capacity of the filter dehydrator element. Still further, the provision of multiple interleaved layers of fiberglass and sheets of cellulose results in an amplifying of the automatic fuel shut off function of the filter dehydrator element. This is achieved since the outer layer of fiberglass 57 and sheet of cellulose 56 are the first to become saturated with water. As the fluid permeability of the outermost thin, tough, membrane-like sheet of water retaining cellulose 56 decreases, the pressure drop across this sheet of cellulose dramatically increases. This substantially increases the compressive load on subsequent layers of fiberglass, namely layers 55 and 46, against the rigid interior supporting tube 44. This provides for the rapid release of water coalesced thereon to the underlying water retaining cellulose layers 54 and 45. This hastens the saturation of these layers of cellulose with water causing a substantial decrease in the fluid permeability of these layers and thus amplifying the fuel shut off feature.

The individual fuel filter element 42 described above provides for fuel flow therethrough at an approximate rate of one U.S. gallon per minute per one inch of element length (1.5 litres/minute/centimetre). The number of elements and their lengths are naturally dependent upon the desired rate of fuel flow. Generally, most systems will require a rate of approximately 300 to 600 U.S. gallons per minute (1100 to 2200 litres/minute). This may be provided in any number of ways. For example, if a total flow rate of 300 gallons per minute (1100 litres/minute) is desired, the housing of the fuel filter apparatus would be fitted with fifteen individual fuel filter dehydrator elements 42, each 20 inches (51 cm) long, positined therein.

In operation, the fuel filter dehydrator apparatus receives fuel, under pressure, at a fuel inlet of the housing. Thereafter, the fuel flows to the individual fuel filter dehyrator elements 42 wherein the fiberglass layers coalesce residual water in the fuel into larger water droplets which migrate to and are retained by the water retaining cellulose fiber layers contained therein. The cleansed and dehydrated fuel then passes downwardly through the interior of support tubes 44 and through nozzles which fit the open ends of the elements into a common outlet chamber. Thereafter, the cleansed and dehydrated fuel leaves the apparatus through a common fuel outlet. The fuel filter apparatus is designed to shut down the fuel supply system automatically upon saturation of the filter dehydrator elements with water. This is accomplished by the rapid decrease in the fluid permeability of the diaphragm-like cellulose sheets contained within the filter dehydrator elements 42 which provide a pressure drop that normally overcomes the delivery pressure of the fuel entering the filtration apparatus. However, the fuel filter apparatus 4 may also be designed to shut down the primary filter dehyrator when a predetermined differential pressure is attained across the filter apparatus. This condition may be used to shut down the fuel delivery system in its entirety or route the fuel to an alternative filter dehydrator. Concurrently therewith, the operator would be informed of the need to replace the filter dehydrator elements in the filtration apparatus.

## CLAIMS

1. A fuel filter dehydrator element (42) comprising a sandwich of layers of material including a layer (45) of material which is adapted to absorb and retain water, and upstream thereof a layer (46) of material which is adapted to coalesce water, whereby water in fuel passing through the coalescing layer is coalesced into droplets at least some of which are absorbed by the absorptive layer, the absorptive layer being adapted to reduce in permeability as the material thereof becomes saturated with water and thus cause a pressure drop across the absorptive layer, characterised in that the sandwich of layers includes a second such absorptive layer (54) upstream of the first-mentioned coalescing layer (46) and a second such coalescing layer (55) upstream of the second absorptive layer (54), the element further comprising means (44, 53) to support the sandwich of layers, such that as the second absorptive layer (54) becomes water saturated and reduces in permeability, the pressure drop across that layer is reacted by and compresses the first coalescing layer (46), thus forcing water to exhude from the first coalescing layer (46) into the first absorptive layer (45) thereby to reduce the permeability of the first absorptive layer (45) and thus reduce further the overall permeability of the filter element.

2. An element as claimed in Claim 1 characterised in that the sandwich of layers includes a further such coalescing layer (57) and absorptive layer (56) arranged in relation to such layers (54, 55) downstream thereof in a similar way to the

- 12 -

0177118

arrangement of the second layers (54, 55) with respect to the first layers (45, 46).

3. An element as claimed in Claim 1 or 2, characterised in that sheets of material to form said layers are wound spirally around a perforate former, so that at least one of said sheets provides at least two of said layers of the element.

4. An element as claimed in any preceding claim, characterised in that the absorptive layers are formed from cellulose fibre.

5. An element as claimed in Claim 4, characterised in that said absorptive cellulose fibre layers are formed from a thin, tough, diaphragm-like sheet of water absorptive and water insoluble cross-linked carboxymethyl cellulose fibre material.

6. An element as claimed in Claim 5, characterised in that said sheet of cellulose fibre material is approximately 0.007 inches (170 microns) thick with a mass of approximately 0.018 pounds per square foot (90 g per square metre) of sheet.

7. An element as claimed in any preceding claim, characterised in that the coalescing layers are formed from one or more of the following materials:
   (i)   glassfibre;
   (ii)  steel wool;
   (iii) stainless steel filaments or wires;
   (iv)  aluminum filaments or wires;
   (v)   oxidized aluminum filaments.

8. An element as claimed in Claim 7, characterised in that the coalescing layers are formed from a sheet of glassfibre material.

9. An element as claimed in Claim 8, characterised in that said sheet of fibreglass has a mass of approximately 0.010 pounds per square foot (50 g per square metre) of sheet and a fibre diameter of approximately 0.00004 inch (1 micron).

10. An element as claimed in any preceding claim, characterised in that the layers are wound around a porous tube (44).

11. An element as claimed in Claim 10 characterised in that said porous tube (44) is first wrapped with a PVC coated fibreglass support screen (47) and then a layer (48) of spun bonded nylon as a media migration barrier.

12. An element as claimed in Claim 10 characterised in that said porous tube (44) is wrapped in sequence with a set of layers including:
a first PVC coated fibreglass screen (47);
a first spun bonded nylon layer (48);
a first polyester scrim (49);
a second PVC coated fibreglass support screen (58);
a second spun bonded nylon layer (50);
a second polyester scrim (59);
said first water retaining cellulose fibre layer (45);
said first water coalescing fibreglass layer (46);
a third polyester scrim (60);
said second water retaining celluluse fibre layer (54);

said second layer of said water coalescing fibreglass (55); a fourth polyester scrim (61); a third PVC coated fibreglass screen (65); and a porous tubular jacket (53).

13. The fuel filter dehydrator element of Claim 12 characterised in that upstream of said fourth polyester scrim (61) at least one group of additional layers are provided, said group of additional layers including in sequence: an additional layer (56) of said water retaining cellulose fibre; an addtional layer (57) of said water ccoalescing fibreglass; and an additional layer of polyester scrim (62); so that when the additional layer of cellulose fibre becomes saturated with water it has a compressive effect on downstream layers of coalescing fibreglass releasing water coalesced in said fibreglass to said cellulose fibre thus amplifying the fuel shut off effect.

14. An element as claimed in Claim 13 wherein two of said groups of additional layers are provided.

15. An element of any preceding claim characterised in that the porous tubular jacket is formed from a perforated cellulose layer.

16. A method of filtering and dehydrating fuel comprising the steps of passing fuel through a layer of material which coalesces into droplets water in the fuel, passing the fuel and water droplets to

- 15 -    0177118

an absorptive layer of material which can pass the fuel but which absorbs at least some of the droplets and reduces in permeability as the layer becomes saturated with water to cause a pressure drop across the absorptive layer, characterised by subsequently passing the fuel through a second pair of such layers, using the second coalescing layer to react at least in part the pressure drop across the first absorptive layer as that layer becomes saturated and thus cause compression of the second coalescing layer, using such compression of the second coalescing layer to cause water droplets to exhude from the second coalesing layer into the second absorptive layer to reduce the permeability of the second absorptive layer and thus increase the total pressure drop across the layers.

FIG. 1.

FUEL/WATER/DIRT
IN

FUEL
OUT

FIG. 2.